# EUROPEAN PATENT APPLICATION

(11) **EP 1 235 411 A2**
(43) Date of publication of application: **28.08.2002**
(21) Application number: 02251339.4
(22) Date of filing: 26.02.2002
(51) Int. Cl.: H04L 29/06

(54) **Splicing persistent connections**

(30) Priority: 26.02.2001 US 793455
(71) Applicant: Avaya Communication Israel Ltd., Tel Aviv 61131 (IL)
(72) Inventor: Shabtay, Lior, Ganey Tikva 55900 (IL); Friedman, Ofir, Rishon Lezion 75326 (IL); Kronental, Guy, Givat Shmuel (IL); Beiser, Dan, Raanana 43408 (IL); Amitai, Eyal, Ramat Gan 52571 (IL)
(74) Representative: Williams, David John

(57) **Abstract**

A method of connecting a client to a server by a load balancer associated with a plurality of servers. The method includes establishing a first connection for transmission of packets between the load balancer and the client, selecting a server to service the client, and splicing the first connection with a second connection between the load balancer and the selected server, the second connection being established before the first connection.

## Description

### FIELD OF THE INVENTION

The present invention relates to communication networks and in particular to packet based networks.

### BACKGROUND OF THE INVENTION

Web servers are commonly used to provide users with information and/or receive input from users. Generally, messages transmitted between clients and Web servers are transmitted in accordance with the HTTP (Hypertext transfer protocol) protocol. In the HTTP protocol, the client transmits to the server a request message which generally includes a uniform resource locator (URL) which indicates the file (or any other object) to which the request message pertains. The request message may be included in one or more packets, the first of which usually includes the URL. Responsive to the request message, the server transmits to the client a result message which includes the response of the server to the request.

The HTTP messages are transmitted on TCP connections. Generally, when a client wants to access a server it establishes a TCP connection with the well known HTTP port (i.e., TCP port #80) or with any other HTTP port of the server, and transmits the HTTP request message on the connection, after it is established. The establishment of a TCP connection requires transmission of three packets between the client and the server, and may require a small, but noticeable, amount of time. In addition, establishing the connection consumes computation time in the server. In an early version of the HTTP protocol, each HTTP request message is transmitted on a separate TCP connection to the server, in a mode referred to as a persistent mode. The server sends the HTTP response message on the TCP connection on which the request message was received and then closes the TCP connection. A newer HTTP version (i.e., HTTPv1.1) optionally uses the same TCP connection for all the HTTP messages transmitted between the client and the server. A single TCP connection may thus carry a stream of HTTP request messages from the client to the server. The time required for establishing the TCP connections is reduced using this scheme. Still, servers must spend some of their computation resources managing the establishment and closing of TCP connections, especially when persistent mode is not used, for example, with clients (e.g., browsers, cache servers) which do not support the newer HTTP version.

Many Web sites are hosted by a plurality of servers, because of the large number of clients accessing the Web site, the large volume of the information carried by the Web site and/or for redundancy purposes. A load balancer receives the packets directed to the Web site and forwards them to a respective server based on one or more parameters. Load balancers are also used for other purposes, for example, for redirecting HTTP requests to a proxy cache.

Some load balancers select the server to which a packet is forwarded in a manner which distributes the packet load, substantially evenly, between the servers hosting the Web site. In these load balancers, the selection of the server is independent of the contents of the message directed to the Web site. These load balancers generally forward the packet with the request to establish a TCP connection, directly to the selected server, such that the TCP connection is established between the client and the selected server.

In other load balancers, the selection of the server depends on the contents of the message directed to the Web site. For example, different portions of the Web site may be hosted by different servers. In such cases the decision on the server to which a packet is forwarded depends on the portion of the Web site to which the packet relates. Generally, the portion of the Web site to which a sequence of packets relates, is determined based on the URL of the request message. In other cases, the determination is based on a cookie field and/or a request type field of the packet. In these load balancers, the TCP connection is created between the client and the load balancer, so that the load balancer can receive the first packet of the request message and examine the URL. After the URL is examined, the load balancer establishes a TCP connection between the load balancer and the selected server. The load balancer then operates as a bridge between the two TCP connections (i.e., the connection between the client and the load balancer and the connection between the load balancer and the selected server) in a procedure referred to as splicing. While the TCP connection between the load balancer and the selected server is being established, the first packet of the request message must be stored in the load balancer. This requires managing a large storage area for all the first packets of connections for which the load balancer is currently selecting a server.

### SUMMARY OF THE INVENTION

An aspect of some embodiments of the present invention relates to a load balancer which manages unused HTTP message connections with at least some of the servers with which the load balancer is associated. When a first packet of an HTTP request message is received by the load balancer, the load balancer selects a server to receive the request message and the packet is immediately forwarded on a previously established TCP connection between the load balancer and the selected server. Using previously established connections, shortens the response time of the servers and eliminates the need to store, in the load balancer, the first packet of each message, until a connection with the selected server is established. It is noted, however, that in some cases the time for establishing a TCP connection between the load balancer and the selected server is much shorter than required to establish a TCP connection between the load balancer and the client.

In some embodiments of the invention, the load balancer monitors the TCP connections with the servers such that at substantially any time the number of unused connections with each server is within a predetermined allowed range of the respective server.

An aspect of some embodiments of the present invention relates to a load balancer which keeps track of traffic it forwards on spliced connections (formed of a client connection connecting a client to the load balancer and a server connection connecting the load balancer to a server). If necessary, the load balancer changes the splicing of the connections (e.g., replaces the server connection) responsive to changes in the stream. Optionally, when a new request message is received by the load balancer, the load balancer selects a server to service the new request, not necessarily the same server as serviced the previous request. Optionally, the server which serviced the previous request is given priority over other servers in selecting the new server. It is noted that in the prior art, load balancers which perform the server selection based on information in the HTTP requests, e.g., the URL, would not generally allow use of a single TCP connection for a plurality of requests. Exceptions, such as when a single IP address represents a plurality of site names hosted by respective servers and the load balancing uses only the name of the site from the URL is used in the load balancing, are very limited.

An aspect of some embodiments of the present invention relates to a load balancer which manages TCP connections that are substantially continuously open, with its associated servers. Optionally, the TCP connection for transferring a message from the load balancer to the server is chosen independent of the client from which the message was received. In some embodiments of the invention, the same TCP connection connecting the load balancer to a server may serve requests from different clients. The use of the same TCP connections by the server for a plurality of different clients, reduces the load on the server in handling TCP connections. In some embodiments of the invention, a server needs to establish and/or close connections substantially only when there are large changes in the load on the server and/or when an error occurs.

Optionally, one or more of the aspects of the present invention are implemented by load balancers which select servers based on information in the HTTP request messages, e.g., URL or cookie fields. Alternatively or additionally, one or more of the aspects of the present invention are implemented by load balancers which select servers irrespective of the information in the HTTP request messages.

There is therefore provided in accordance with some embodiments of the invention, a method of connecting a client to a server by a load balancer associated with a plurality of servers, including establishing a first connection for transmission of packets between the load balancer and the client, selecting a server to service the client, and splicing the first connection with a second connection between the load balancer and the selected server, the second connection being established before the first connection.

Optionally, selecting the server includes selecting a server responsive to the contents of an HTTP request transmitted on the first connection.

Alternatively or additionally, selecting the server includes selecting a server responsive to a number of available connections between the load balancer and one or more of the servers with which the load balancer is associated. Further alternatively or additionally, selecting the server includes selecting a server which has at least one available connection with the load balancer. Optionally, the method includes monitoring the number of connections between the load balancer and at least one of the servers, such that the number of connections which are not spliced with connections to clients is within a predetermined range, when the total number of connections handled by the server is below a predetermined maximal number of connections allowed by the server.

Optionally, the method includes disconnecting the splicing of the first and second connections and splicing the second connection with a third connection established between the load balancer and a client. Optionally, the first and third connections are formed between the load balancer and the same client. Alternatively, the first and third connections are formed between the load balancer and different clients. Optionally, the method includes closing the first connection substantially concurrently with disconnecting the splicing of the first and second connections.

Optionally, the method includes splicing the first connection to a fourth connection which connects the load balancer to a server. Optionally, the fourth connection includes a previously established connection. Optionally, the method includes examining the contents of packets transmitted on the first connection to determine when a new request is transmitted on the first connection. Optionally, the method includes selecting a server to service the new request and splicing the first connection to a connection leading to the server selected to service the new request.

In some embodiments of the invention, splicing the first connection to a connection leading to the server selected to service the new request includes continuing the splicing of the first connection and a currently spliced connection, if the current connection spliced to the first connection leads to the server selected to service the new request.

Alternatively or additionally, splicing the first connection to a connection leading to the server selected to service the new request includes disconnecting the current splicing of the first connection and splicing the first connection to a connection leading to the server selected to service the new request, if the current connection spliced to the first connection does not lead to the server selected to service the new request. Optionally, disconnecting the current splicing of the first connection includes examining the contents of packets transmitted on the first connection to determine when a response to a previous request was transmitted on the connection and disconnecting the current splicing only after the entire response was transmitted to the client.

Optionally, disconnecting the current splicing of the first connection includes disconnecting the current splicing only after receiving from the client acknowledgment of receipt of the entire response. In some embodiments of the invention, selecting a server to service the new HTTP request gives preference to the server to which the connection currently spliced to the first connection leads. Optionally, the first and second connections comprise TCP connections.

There is further provided in accordance with some embodiments of the invention, a method of operating a load balancer associated with a plurality of servers, including establishing one or more connections with at least one of the plurality of servers, splicing one or more of the established connections to client connections responsive to requests of clients to connect to one or more of the servers, and monitoring the number of connections between the load balancer and the at least one of the plurality of servers, such that at least one of the connections leading to one or more of the servers is not spliced to connections with clients, when the total number of connections handled by each of the servers is below a respective predetermined maximal number of connections allowed by the server.

In some embodiments of the invention, monitoring the number of connections includes monitoring such that the number of connections which are not spliced with connections to clients is within a predetermined range, when the total number of connections handled by the server is below a predetermined maximal number of connections allowed by the server.

Alternatively, monitoring the number of connections includes monitoring such that the number of connections which are not spliced with connections to clients is equal to a predetermined number except during short transient periods, when the total number of connections handled by the server is below a predetermined maximal number of connections allowed by the server. Optionally, the predetermined range is different for at least two of the plurality of servers.

There is further provided in accordance with some embodiments of the invention, a method of transmitting packets from a load balancer to a server, including establishing a TCP connection for transmission of packets between a load balancer and a server, and transmitting packets received by the load balancer from a plurality of different clients, to the server, on the same TCP connection.

Optionally, transmitting packets from a plurality of different clients on the connection includes splicing the connection to a first client connection for transmitting packets from the first client and then splicing the connection to a second client connection for transmitting packets from the second client. Optionally, the established TCP connection is kept open for at least an hour or a day. Optionally, at least some of the packets are received by the load balancer over non-persistent HTTP connections.

There is further provided in accordance with some embodiments of the invention, a method of connecting a client to a server by a load balancer associated with a plurality of servers, including establishing a first TCP connection between the load balancer and the client, receiving a plurality of HTTP requests on the first connection, selecting a server to service each of the HTTP requests, at least partially responsive to a content of the requests, forwarding the requests to the selected respective servers, the selected servers including at least two servers, receiving responses to the forwarded requests from the respective servers, and forwarding the received responses to the client without storing the responses, for repeated use, by the load balancer.

Optionally, establishing the first connection includes establishing an HTTP persistent connection. In some embodiments of the invention, selecting a server includes selecting responsive to a URL in the request and/or to a cookie field in the request.

There is further provided in accordance with some embodiments of the invention, a method of connecting a client to a server by a load balancer associated with a plurality of servers, including establishing a first TCP connection between the load balancer and the client, splicing the first connection to a second connection between the load balancer and a server, transmitting a plurality of packets on the spliced first and second connections, and examining the application level contents of the plurality of packets transmitted on the connections to determine when to disconnect the splicing.

Optionally, examining the plurality of packets includes determining when a response message ends and when an acknowledgment of receipt of a last byte of the response was received from the client. Optionally, examining the plurality of packets includes determining when a new request is transmitted on the first connection. Optionally, the method includes determining for the new request whether it can be handled by the server to which the second connection leads.

### BRIEF DESCRIPTION OF FIGURES

Particular non-limiting embodiments of the invention will be described with reference to the following description of embodiments in conjunction with the figures. Identical structures, elements or parts which appear in more than one figure are preferably labeled with a same or similar number in all the figures in which they appear, in which:
Fig. 1 is a schematic block diagram of a server farm, useful for explaining an embodiment of the present invention; and
Fig. 2 is a flowchart of the acts performed by a load balancer in handling an HTTP client request, in accordance with an embodiment of the present invention.

### DETAILED DESCRIPTION OF EMBODIMENTS

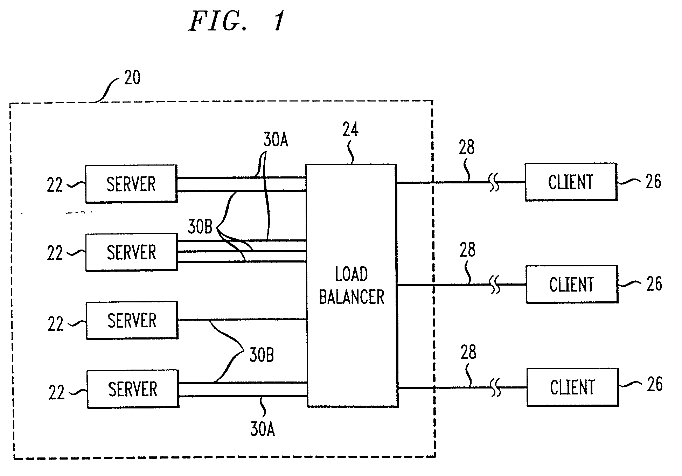

Fig. 1 is a schematic block diagram of a server farm 20 with relevant connections, in accordance with an embodiment of the present invention. Server farm 20 comprises a plurality of servers 22 which host information of one or more Web sites. A load balancer 24 receives packets including HTTP request messages directed to the Web sites, selects a server 22 to service each of the request messages and passes each of the packets to its respective selected server, in accordance with a splicing operation.

In some embodiments of the invention, a plurality of clients 26 form TCP connections 28 (referred to herein as client connections) with load balancer 24. Load balancer 24 manages TCP connections 30 (referred to herein as server connections and marked 30A and 30B) with at least some of servers 22. Some of server connections 30, marked 30A, are currently spliced to respective connections 28. Other TCP server connections 30, marked 30B, are currently not in use and are available for immediate use when a client establishes an additional connection with load balancer 24.

In some embodiments of the invention, load balancer 24 makes sure that at substantially all times the number of available connections 30B between load balancer 24 and each of servers 22 is within a predetermined range or is equal a predetermined number. Optionally, the number of available connections 30B is allowed to go above or below the predetermined number or range for short periods, for example for transient times between when an existing connection is spliced and the formation of another connection. Optionally, when the number of connections of a server 22 approaches a maximal number of connections handled by the server, the number of available connections 30B is allowed to decrease below the predetermined number. Further optionally, when the number of connections 30 to a server 22 reaches the maximal capacity of the server no available connections 30B are kept to the server.

Optionally, each time an available connection 30B is spliced to a respective connection 28, load balancer 24 initiates the creation of another connection 30B with the same server 22. In addition, each time a spliced server connection 30A is released from its splicing the connection 30A is closed.

In some embodiments of the invention, the predetermined number or range is the same for substantially all of servers 22. Alternatively, some or all of servers 22 have different predetermined ranges of required numbers of available connections 30B, for example according to the rate at which the servers 22 receive new requests. In some embodiments of the invention, the predetermined range of required numbers of available connections 30B is chosen responsive to the rate at which new connections are formed with the servers 22. Alternatively or additionally, the predetermined range is chosen so as to minimize the load, on servers 22, required to create and close connections and/or manage the connections. In some embodiments of the invention, the number of available connections 30B is a function of the load on farm 20, such that when the farm is very busy handling client requests, the number of available connections 30B is very small or zero. Particularly, when a server 22 reaches its maximal capacity of connections 30 which it may service, the server 22 does not manage unused connections 30B.

In some embodiments of the invention, some of servers 22 do not have available connections 30B during some of the time. Optionally, when two or more servers 22 can handle the same groups of requests, only one of the servers has available server connections 30B leading to it. In some embodiments of the invention, the number of available connections 30B to each server 22 depends on the load of the server, such that servers which are relatively loaded have fewer or no available connections 30B, while servers 22 which are less loaded have more available connections 30B.

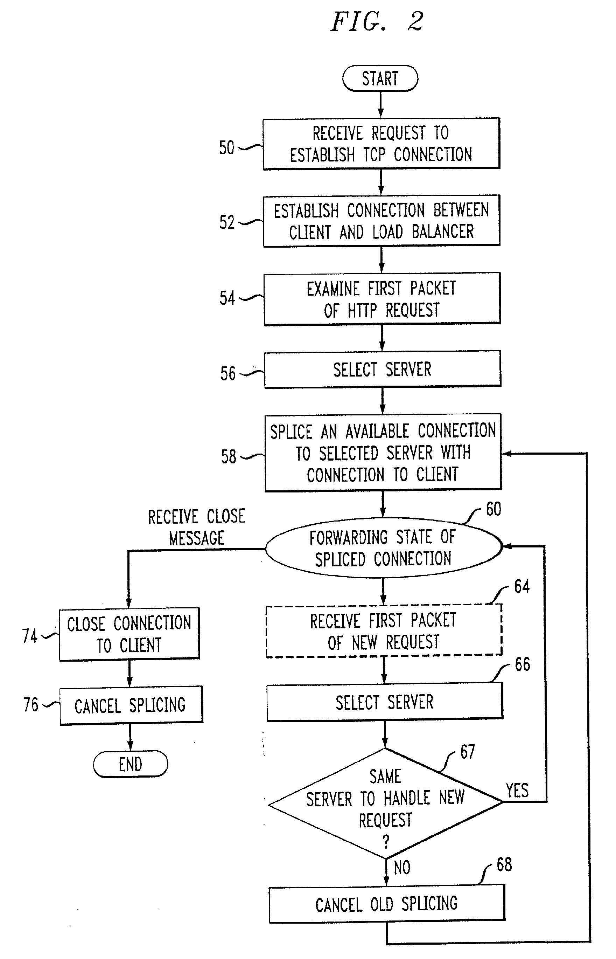

Fig. 2 is a flowchart of the acts performed by load balancer 24 in handling an HTTP client request, in accordance with an embodiment of the present invention. In the embodiment of Fig. 2 it is assumed that servers 22 support use of a persistent connection mode, i.e., a mode in which a single connection is used for a plurality of HTTP requests, and that the request messages transmitted from clients 26 to servers 22 include indications that the clients support the use of the persistent mode. It is noted, however, that this assumption is not required for implementing the present invention, and embodiments in which at least some of servers 22 and/or clients 26 do not support persistent connections are described hereinbelow. In the persistent mode, the server transmits with its responses indication of the end of the response, e.g., the length of the response. Thus, in the persistent mode, it is not required to close the TCP connection between the server and the client to signify the end of the response.

Upon receiving (50) a TCP packet requesting to establish a connection with a Web site hosted by server farm 20, load balancer 24 responds with a respective TCP packet so as to establish (52) a connection 28 between the client and load balancer 24. One or more of the packets received on the established connection, e.g., the first packet of an HTTP request message or the one or more packets including the URL, are examined (54) and accordingly a server 22 to handle the requests of the client, is selected (56). An available connection 30B to the selected server 22 is then spliced (58) to the connection 28 between load balancer 24 and the client and the examined packet is forwarded, in accordance with the splicing, to the selected server 22.

The handling of the connection by load balancer 24 then moves to a forwarding state 60 in which packets received on the spliced connection are forwarded in accordance with the splicing. In some embodiments of the invention, during forwarding state 60, load balancer 24 monitors the packets transmitted on the spliced connection to determine when the first packet of a new HTTP request is received. When a first packet of a new request is received (64), the packet is examined to select (66) a server 22 to service the new request.

If (67) the server handling the previous request should handle the new request, load balancer 24 moves back to forwarding state 60. If (67), however, a different server 22 is selected, the splicing of the client connection 28 with the server connection 30 to the previously selected server 22 is canceled (68), possibly after a wait period, for example a wait period which allows the response to the previous request to be received in its entirety by the client. The client connection 28 is then spliced (58) with an available server connection 30B to the newly selected server 22, as described in detail hereinbelow. Alternatively, a new server connection 30 to the selected server 22 is created (e.g., if there are no available connections 30), and the client connection 28 is spliced to the newly created server connection 30. The freed server connection 30 is either kept alive in a pool of available connections 30B or is closed, for example if a sufficient number of available connections 30B to that specific server 22 already exist. The handling of the newly spliced combined connection then moves to forwarding state 60.

By splicing connection 28 to an available connection 30B, load balancer 24 reduces the latency in receiving a response from farm 20, by eliminating the wait during the time required for establishing a connection 30. In addition to the time saving in itself, load balancer 24 does not need special accommodations for storing packets beyond those standardly used by switches for storing packets while they are handled, and no intermediate term storage, e.g., for storage until acknowledgment is received, is required. Thus, the storage space required for buffering packets until they are forwarded to the servers is reduced, as the latency is shortened.

In some embodiments of the invention, each selected server 22 always has at least one available connection 30B which may be used immediately. Alternatively, if there are no available connections 30B to the selected server 22, load balancer 24 creates a connection 30 with the selected server 22 and the packet is stored meanwhile. Optionally, the selection of server 22 and/or the managing of available connections 30B are performed in a manner which minimizes the chances of selecting a server 22 which does not have an available connection 30B leading to it.

When the client receives the responses to all the HTTP requests it transmitted, the client initiates the closing of the TCP connection 28 to load balancer 24. Accordingly, the connection 28 is closed (74) and the splicing of the server connection 30 to the closed connection 28 is canceled (76). In some embodiments of the invention, the server connection 30 is returned to a pool of available connections 30B for use by other clients.

If the server initiates the closing of the spliced connection, for example due to the connection being idle for a long period, load balancer 24 responds by allowing the server connection 30 to close and in addition initiates the closing of the client connection 28 to which it was spliced. Optionally, an additional connection 30B is created to replace the closed server connection 30. Alternatively, for example for clients with a high QoS, load balancer 24 allows the server connection 30 to close and immediately splices the client connection to an unused connection 30B leading to the same server. Thus, the client receives continuous service even when the server attempts to disconnect the connection. Further alternatively, when the server initiates the closing of the connection, the server connection is closed and the client connection is left without being spliced to a server connection 30. When a new request is received on the client connection, a server is selected to handle the request, and the client connection is spliced to a server connection leading to the selected server.

In some embodiments of the invention, server connections 30 are not established and/or closed except at server and/or load balancer start-up or when an error occurs. Optionally, server connections 30 are established and/or closed when substantial changes occur in the load on one or more of servers 22. In some embodiments of the invention, server connection closing due to a load decrease on a server is performed a predetermined time after the load decrease, so as to avoid closing and establishing connections 30 when load decrease and increase occur within a short period. Thus, the overhead required from servers 22 in establishing and closing connections 30 is substantially reduced. The task of establishing and closing TCP connections is performed by load balancer 24 which may be customized to performing this task.

In some embodiments of the invention, in normal operation, the same connections 30 are used for hours, days and even months. It is noted that in some embodiments of the invention, a connection 30 may be spliced at different times to connections 28 leading to different clients.

In some embodiments of the invention, the methods of the present invention are used even when the selection (56) of a server to handle the user's request is performed without relation to the contents of the first packet of the request. In these embodiments, the examination (54) of the packet before selecting a server 22 and/or the monitoring of the packets during forwarding state 60, are optionally not performed. It is noted that when the selection of a server 22 is performed without relation to the contents of the request, the TCP connection could be established directly with the selected server 22 rather than with load balancer 24. Such direct connection would avoid the need for splicing by load balancer 24, but would loose the advantage of reducing the overhead of establishing and closing TCP connections by servers 22.

Referring in more detail to selecting (56) a server 22, in some embodiments of the invention, the selection of the server is performed responsive to the contents of one or more fields of the HTTP request. Optionally, the selection is performed responsive to the URL referred to in the request and/or a cookie field of the request. Alternatively or additionally, any other methods known in the art for selection of a server may be used, including methods which do not relate to the contents of the request, as discussed above. In some embodiments of the invention, the selection (56) of the server 22 to service a specific client is performed responsive to the numbers of available connections 30B to the different servers 22. In an exemplary embodiment of the invention, when two or more servers 22 are equally qualified to handle a client, the server with more available connections 30B, is chosen.

It is noted that in some cases, the information in the request which is used in selecting (56) a server 22 is not included in its entirety in the first packet of the request but rather in a subsequent packet, or in a plurality of packets. Optionally, in such cases load balancer 24 stores the leading packets received on the connection until the packet (or all the packets) including the required information is received. Alternatively or additionally, if the request is received on a newly established connection, load balancer 24 selects a server 22 without having the required information taking the risk that an error may occur. If the request is received on a previously used connection, load balancer 24 optionally selects the server to which the connection currently leads. Further alternatively or additionally, load balancer 24 forwards the packets of the request to a plurality of servers (optionally with a small or zero size TCP window). According to later received packets of the request and/or according to the contents of the response, load balancer 24 selects the load balancer whose response is returned to the client, and the remaining responses are discarded.

Referring in more detail to splicing (58) the client connection with the selected server connection, substantially any splicing method known in the art may be used. For example, the splicing may include changing one or more of the IP addresses, TCP ports, TCP sequence numbers and/or checksums of the packets of the connection. In some embodiments of the invention, the splicing to one or more servers 22 may include changing the contents of the HTTP request, for example, in order to change regular HTTP requests into a proxy request format. Optionally, different splicing methods are used for different servers 22.

Referring in more detail to the monitoring performed during forwarding state 60, in some embodiments of the invention, load balancer 24 checks each packet transmitted from the client to server farm 20 to determine whether the packet is a first packet of an HTTP request. Optionally, the determination is performed based on the beginning of the HTTP field of the packets. Alternatively, load balancer 24 examines the entire HTTP field of the packets, searching for HTTP command keywords, e.g., "GET", "SET". Alternatively or additionally, load balancer 24 examines the response messages transmitted from the selected server 22 to the client. For example, load balancer 24 determines the length of the response from the first packet of the response and accordingly determines when the last packet of a response is transmitted.

In some embodiments of the invention, the client 26 may transmit an additional request before the response to the previous request was entirely received. If the new request is to be handled by a different server than the old request, load balancer 24 stores the new request until the response to the previous request was entirely received by the client 26 and optionally an acknowledgment of the reception was forwarded to the server 22 which provided the response. Optionally, load balancer 24 examines the beginning of the response to determine its length and then examines the acknowledgments forwarded from the client 26 to the server 22 to determine when the response was entirely received. After the response of the previous request was forwarded to the client, and optionally the client transmitted acknowledgment packets to the load balancer 24 (which forwards the acknowledgments to the server) the splicing of the client connection to the server handling the previous connection is disconnected and the client connection is spliced to a connection leading to the server selected to handle the new request. The stored new request is then forwarded to the selected server.

It is noted in some of these embodiments, load balancer 24 does not require long term storage space, i.e., for storage of packets for repeated use and/or for after acknowledgments are received.

Alternatively or additionally, if the new request is to be handled by a different server than the old request, load balancer 24 waits a predetermined period from receiving the new request and then disconnects the old splicing. The predetermined period is chosen such that substantially always the response to the old request was supplied entirely (with acknowledgments) before the old splicing is disconnected. Further alternatively or additionally, load balancer 24 waits until no packets are transmitted on the connection for over a predetermined amount of time and then disconnects the old splicing. Further alternatively or additionally, the new request is forwarded, with a limited-size TCP window (e.g., a zero sized window), to the newly selected server before the splicing to the previous server is disconnected. Optionally, data received from the newly selected server is stored in a buffer for transmission to the client after the connection to the old server is disconnected. After the response to the previous request is received in its entirety, the client connection is spliced to a connection leading to the newly selected server and the TCP window is enlarged.

In some embodiments of the invention, load balancer 24 periodically transmits keep alive packets on connections 30B which are not currently in use, to prevent the connections from being disconnected due to long idle periods. Alternatively or additionally, load balancer 24 allows at least some of connections 30B which are idle for a long time to be closed, thus using the idle time as a means for monitoring the number of unused connections 308.

Referring in more detail to selecting (66) a server 22 for the new request, in some embodiments of the invention, preference is given to the server which serviced the previous request of the same client connection. Optionally, unless totally impossible, the same server as handled the previous request is chosen. Alternatively, selecting (66) a server 22 for the new request is performed as the first selection (56) of a server for a client, without giving preference to the server 22 previously selected.

In some embodiments of the invention, when load balancer 24 receives a client request which does not indicate support of the persistent mode, the packet is forwarded to a server in the same manner as described above in relation to requests which indicate support of the persistent mode. Optionally, load balancer 24 does not check whether the packets it receives support the persistent mode. When a selected server 22 finishes transmitting the response to a request which does not indicate the support of the persistent mode, the server 22 closes the connection 30 on which the request was received. In some embodiments of the invention, load balancer 24 closes the connection 28 to which the closed connection 30 was spliced, responsive to the closing of connection 30. Optionally, in addition, load balancer 24 creates a new connection 30B to the server 22 to replace the closed server connection. Thus, the number of available connections 30B remains constant, although server 22 closes the connections after each request is handled.

Alternatively or additionally, load balancer 24 adds indication of support of the persistent mode to client requests forwarded to servers 22. When a response message is received for a request to which indication of support of the persistent mode was added, load balancer 24 keeps track of the progression of the response and at the end of the response closes the connection 28 on which the request was received from the client, for example by sending a packet with the TCP FIN flag set. Optionally, load balancer 24 also erases from the response message any indication of operation in the persistent mode (e.g., a length of the response in some HTTP versions). Alternatively, any such indications are left in the response as they are generally ignored by the client. Thus, the same server connection 30 may be used by a server 22 to receive and reply to a plurality of requests, even when some or all of the clients do not support persistent HTTP connections.

In some embodiments of the invention, when a server 22 does not support the persistent mode, the server closes the connection 30 on which it receives a request when it finishes transmitting the response to the request. Responsive to the closing of the server connection 30, load balancer 24 closes the connection 28 spliced to the closed connection 30. Alternatively or additionally, load balancer 24 keeps track for each connection 28 of whether the requests indicate support persistent connections. If the request of a connection 28 indicates support of persistent connections, server 22 optionally does not close the connection 28 responsive to the closing of the server connection 30 to which it was spliced. Rather, load balancer 24 splices the connection 28 to an unused connection 30 leading to the server 22 which handled the previous request. Alternatively, load balancer 24 leaves the client connection 28 non-spliced until a new request is received and according to the contents of the request a server connection 30 is chosen to be spliced to the client connection 28.

Monitoring the packets forwarded through load balancer 24 during the operation of forwarding state 60, allows using the persistent mode even when the selection (56) of servers 22 to handle HTTP requests depends on the contents of the request. When HTTP requests which must be handled by different servers 22 pass on the same client connection 28, load balancer 24 identifies each request separately and passes it, on a respective server connection 30, to the respective server 22 which is capable of handling the specific request.

It is noted that some embodiments of the invention may perform fewer tasks than those described above. Particularly, in an embodiment of the invention, load balancer 24 does not support use of persistent connections. In this embodiment, monitoring of the contents of the requests and responses, in order to determine when a new request is received and/or when the response to a request is completed, is not performed. Using this embodiment enjoys the benefits of using pre-established server connections 30B, substantially without adding to the complexity of load balancer 24. The use of pre-established server connections reduces the amount of storage space required from load balancer 24, as the load balancer is not required to store packets from clients until a connection is established with the server to which the packets are to be forwarded.

It is noted that load balancer 24 may be implemented in hardware, software or any combination thereof. Optionally, load balancer 24 comprises a hardware unit which handles normal packets and transfers special packets to a processor running a software module. Such special packets may include, for example, packets including TCP or IP options and/or requests which do not include the entire URL in the first packet of the request.

In some embodiments of the invention, load balancer 24 includes a buffer in which packets are stored while load balancer 24 waits for additional information, for example, when the information required to select a server 22 for a request is not in the first packet of the request. The size of the buffer is optionally smaller than required for storing all the request packets received until a connection is established with the selected server, as in load balancers known in the art.

It is noted that although the above description generally relates to a load balancer which services a farm of servers, the present invention may be used also for other load balancers, such as load balancers which perform cache redirection. Such load balancers may operate with one or more proxys which in the present invention and in the claims are considered as a type of server.

It is further noted that although the present invention has been described in relation to the TCP/IP protocol suite, some embodiments of the invention may be implemented with relation to other packet based transmission protocols, such as, for example IPX, DECNET and the ISO protocols. Furthermore, although the above description relates to the HTTP protocol, the principles of the invention may be used with other application protocols, such as the HTTPS protocol.

It will be appreciated that the above described methods may be varied in many ways, including, changing the order of steps, and the exact implementation used. It should also be appreciated that the above described description of methods and apparatus are to be interpreted as including apparatus for carrying out the methods and methods of using the apparatus.

The present invention has been described using non-limiting detailed descriptions of embodiments thereof that are provided by way of example and are not intended to limit the scope of the invention. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art.

It is noted that some of the above described embodiments describe the best mode contemplated by the inventors and therefore include structure, acts or details of structures and acts that may not be essential to the invention and which are described as examples. Structure and acts described herein are replaceable by equivalents which perform the same function, even if the structure or acts are different, as known in the art. Therefore, the scope of the invention is limited only by the elements and limitations as used in the claims. When used in the following claims, the terms "comprise", "include", "have" and their conjugates mean "including but not limited to".

## Claims

1. A method of connecting a client to a server by a load balancer associated with a plurality of servers, comprising:
establishing a first connection for transmission of packets between the load balancer and the client;
selecting a server to service the client; and
splicing the first connection with a second connection between the load balancer and the selected server, the second connection being established before the first connection.

2. A method according to claim 1, wherein selecting the server comprises selecting a server responsive to the contents of an HTTP request transmitted on the first connection.

3. A method according to claim 1, wherein selecting the server comprises selecting a server responsive to a number of available connections between the load balancer and one or more of the servers with which the load balancer is associated.

4. A method according to claim 3, wherein selecting the server comprises selecting a server which has at least one available connection with the load balancer.

5. A method according to claim 1, comprising monitoring the number of connections between the load balancer and at least one of the servers, such that the number of connections which are not spliced with connections to clients is within a predetermined range, when the total number of connections handled by the server is below a predetermined maximal number of connections allowed by the server.

6. A method according to claim 1, comprising disconnecting the splicing of the first and second connections and splicing the second connection with a third connection established between the load balancer and a client.

7. A method according to claim 6, wherein the first and third connections are formed between the load balancer and the same client.

8. A method according to claim 6, wherein the first and third connections are formed between the load balancer and different clients.

9. A method according to claim 6, comprising closing the first connection substantially concurrently with disconnecting the splicing of the first and second connections.

10. A method according to claim 6, comprising splicing the first connection to a fourth connection which connects the load balancer to a server.

11. A method according to claim 10, wherein the fourth connection comprises a previously established connection.

12. A method according to claim 1, comprising examining the contents of packets transmitted on the first connection to determine when a new request is transmitted on the first connection.

13. A method according to claim 12, comprising selecting a server to service the new request and splicing the first connection to a connection leading to the server selected to service the new request.

14. A method according to claim 13, wherein splicing the first connection to a connection leading to the server selected to service the new request comprises continuing the splicing of the first connection and a currently spliced connection, if the current connection spliced to the first connection leads to the server selected to service the new request.

15. A method according to claim 13, wherein splicing the first connection to a connection leading to the server selected to service the new request comprises disconnecting the current splicing of the first connection and splicing the first connection to a connection leading to the server selected to service the new request, if the current connection spliced to the first connection does not lead to the server selected to service the new request.

16. A method according to claim 15, wherein disconnecting the current splicing of the first connection comprises examining the contents of packets transmitted on the first connection to determine when a response to a previous request was transmitted on the connection and disconnecting the current splicing only after the entire response was transmitted to the client.

17. A method according to claim 15, wherein disconnecting the current splicing of the first connection comprises disconnecting the current splicing only after receiving from the client acknowledgment of receipt of the entire response.

18. A method according to claim 13, wherein selecting a server to service the new HTTP request gives preference to the server to which the connection currently spliced to the first connection leads.

19. A method according to claim 1, wherein the first and second connections comprise TCP connections.

20. A method of operating a load balancer associated with a plurality of servers, comprising:
establishing one or more connections with at least one of the plurality of servers;
splicing one or more of the established connections to client connections responsive to requests of clients to connect to one or more of the servers; and
monitoring the number of connections between the load balancer and the at least one of the plurality of servers, such that at least one of the connections leading to one or more of the servers is not spliced to connections with clients, when the total number of connections handled by each of the servers is below a respective predetermined maximal number of connections allowed by the server.

21. A method according to claim 20, wherein monitoring the number of connections comprises monitoring such that the number of connections which are not spliced with connections to clients is within a predetermined range, when the total number of connections handled by the server is below a predetermined maximal number of connections allowed by the server.

22. A method according to claim 21, wherein monitoring the number of connections comprises monitoring such that the number of connections which are not spliced with connections to clients is equal to a predetermined number except during short transient periods, when the total number of connections handled by the server is below a predetermined maximal number of connections allowed by the server.

23. A method according to claim 21, wherein the predetermined range is different for at least two of the plurality of servers.

24. A method of transmitting packets from a load balancer to a server, comprising:
establishing a TCP connection for transmission of packets between a load balancer and a server; and
transmitting packets received by the load balancer from a plurality of different clients, to the server, on the same TCP connection.

25. A method according to claim 24, wherein transmitting packets from a plurality of different clients on the connection comprises splicing the connection to a first client connection for transmitting packets from the first client and then splicing the connection to a second client connection for transmitting packets from the second client.

26. A method according to claim 24, wherein the established TCP connection is kept open for at least an hour.

27. A method according to claim 24, wherein the established TCP connection is kept open for at least a day.

28. A method according to claim 24, wherein at least some of the packets are received by the load balancer over non-persistent HTTP connections.

29. A method of connecting a client to a server by a load balancer associated with a plurality of servers, comprising:
establishing a first TCP connection between the load balancer and the client;
receiving a plurality of HTTP requests on the first connection;
selecting a server to service each of the HTTP requests, at least partially responsive to a content of the requests;
forwarding the requests to the selected respective servers, the selected servers including at least two servers;
receiving responses to the forwarded requests from the respective servers; and
forwarding the received responses to the client without storing the responses, for repeated use, by the load balancer.

30. A method according to claim 29, wherein establishing the first connection comprises establishing an HTTP persistent connection.

31. A method according to claim 29, wherein selecting a server comprises selecting responsive to a URL in the request.

32. A method according to claim 29, wherein selecting a server comprises selecting responsive to a cookie field in the request.

33. A method of connecting a client to a server by a load balancer associated with a plurality of servers, comprising:
establishing a first TCP connection between the load balancer and the client;
splicing the first connection to a second connection between the load balancer and a server;
transmitting a plurality of packets on the spliced first and second connections; and
examining the application level contents of the plurality of packets transmitted on the connections to determine when to disconnect the splicing.

34. A method according to claim 33, wherein examining the plurality of packets comprises determining when a response message ends and when an acknowledgment of receipt of a last byte of the response was received from the client.

35. A method according to claim 33, wherein examining the plurality of packets comprises determining when a new request is transmitted on the first connection.

36. A method according to claim 35, comprising determining for the new request whether it can be handled by the server to which the second connection leads.
